# FASCICULE DE BREVET EUROPEEN

(11) **EP 2 259 157 B1**
(45) Date de publication et mention de la délivrance du brevet: **31.10.2018**
(21) Numéro de dépôt: 10180522.4
(22) Date de dépôt: 09.07.2003
(51) Int. Cl.: B29K 705/00, B29L 31/00, B29C 45/14, G04B 19/04, G04B 1/00, G04B 1/12, G04B 19/20

(54) **MOUVEMENT HORLOGER POUR MONTRE BRACELET**
UHRWERK FÜR ARMBANDUHR
CLOCKWORK FOR WRISTWATCH

(30) Priorité: 09.07.2002 CH 11882002
(43) Date de publication de la demande: 08.12.2010
(62) Demande divisionnaire de: 03762695.9
(73) Titulaire: LVMH Swiss Manufactures SA, 2300 La Chaux de Fonds (CH)
(72) Inventeur: Ruchonnet, Jean-François, 2000, Neuchâtel (CH)
(74) Mandataire: P&TS SA (AG, Ltd.)

(56) Documents cités:
- EP-A1- 0 509 965
- WO-A2-2004/006026
- CH-A- 60 360
- DE-A1- 3 328 474
- DE-C- 499 642
- DE-U- 20 206 965
- FR-A5- 2 141 349
- GB-A- 281 385
- JP-A- 2000 190 354
- US-A- 1 914 015
- US-A- 4 852 072
- DIDEROT ET D'ALEMBERT: "Encyclopedie de Diderot et d'Alembert, Horlogerie", ENCYCLOPÉDIE DIDEROT ET D'ALEMBERT - HORLOGERIE, 31 décembre 1900 (1900-12-31), pages 16-20 ORD, XP003000604,

## Description

La présente invention concerne un mouvement horloger pour montre bracelet, en particulier un dispositif d'entraînement pour mouvement de montre.

La montre bracelet à mouvement mécanique est devenue un objet de luxe et par conséquent sujette à de nombreuses modifications du fait de l'effet de mode. Le boîtier a été l'élément de départ avec ses formes personnalisées, puis le bracelet avec ses formes et matières différentes et ses dispositifs de fermeture. Est venu ensuite l'intérieur de la montre et son mécanisme. De plus en plus ce mouvement a fait l'objet de complications mécaniques montrant ainsi l'ingéniosité des différents systèmes et le savoir-faire du maître d'oeuvre. Il est bien évident que c'est là que les possibilités sont les plus nombreuses et rien ne peut arrêter l'imagination du créateur.

Les montres mécaniques usuelles comportent un accumulateur d'énergie constitué par un barillet, un organe de comptage, ou rouage, un organe de régulation, ou distribution, comportant un échappement et un balancier-spiral qui déterminent la marche de la montre, ainsi qu'un affichage assuré en général par des aiguilles sur un cadran. La présente invention concerne plus particulièrement la chaîne cinématique de transmission de l'énergie et des mouvements entre ces différents organes. Dans les mouvements mécaniques conventionnels, ainsi que dans les mouvements à quartz, les couples et les mouvements sont transmis entre les différents éléments mobiles d'une montre au moyen d'engrenages. Ainsi, le ressort de barillet, en se désarmant, entraîne le tambour de barillet en rotation, puis d'engrenage en engrenage jusqu'au pignon d'échappement et jusqu'aux aiguilles. Les engrenages sont constitués par des roues dentées ou par des crémaillères engrenées directement les uns aux autres.

Les engrenages sont un moyen de transmission d'énergie efficace et dont la fiabilité est éprouvée. Au cours de la réflexion ayant mené à l'invention, il a toutefois été constaté qu'ils imposent un certain nombre de contraintes aux constructeurs de mouvements. Ainsi, les axes des deux roues d'un engrenage doivent être parallèles ou éventuellement perpendiculaires; des axes d'orientation quelconques sont uniquement possibles avec des engrenages coniques coûteux, difficiles à fabriquer et de plus faible rendement. Pour cette raison, les mouvements de montre sont presque toujours construits autour d'une platine et de ponts parallèles entre eux. Ainsi, les mouvements de montre comportent presque toujours deux faces principales planes et parallèles entre elles, toute autre géométrie imposant des contraintes difficiles à surmonter pour la réalisation du train d'engrenage.

Dans le cas de montres de grand diamètre, un mouvement plat n'est pas toujours optimal; une forme incurvée, par exemple une forme concave adaptée au poignet ou une forme convexe permettant à la peau de respirer est souvent désirable. Il serait aussi souhaitable de pouvoir afficher des aiguilles ou d'autres indicateurs non parallèles au cadran, par exemple sur les faces latérales de la montre ou dans un plan oblique. Ces réalisations sont toutefois difficiles à réaliser avec des engrenages cylindriques dont les axes sont parallèles.

Les engrenages transmettent l'énergie de manière efficace uniquement lorsque les deux roues engrenées sont parfaitement alignées et espacées correctement. Dans une montre, il est donc nécessaire de fixer les axes de roues et des pignons avec une très grande précision, ce qui renchérit le coût de fabrication. Des déplacements minimes provoqués par un choc ou une accélération peuvent bloquer l'engrenage; il est donc nécessaire d'utiliser des axes rigides et fixés à la platine et aux ponts à l'aide de moyens antichocs, par exemple de pierres et de paliers incablocs™. Ces éléments sont coûteux, fragiles et difficiles à assembler. Par ailleurs, les dents des composants de l'engrenage doivent impérativement être fabriquées en métal dur afin de limiter leur usure et de garantir un contact optimal même après plusieurs années de fonctionnement.

Les engrenages ont par ailleurs l'inconvénient de nécessiter une lubrification qui doit être répétée périodiquement.

Les engrenages sont aussi peu appropriés à l'entraînement de roues ou de mobiles éloignés les uns des autres dans un mouvement, dans un tel cas, une chaîne d'engrenages intermédiaire doit être utilisée, qui renchérit le coût du mouvement, réduit sa fiabilité et nécessite des axes supplémentaires. Une autre solution chère et encombrante est d'augmenter le diamètre des deux roues de l'engrenage.

Enfin, les deux roues d'un engrenage tournent nécessairement en sens opposé; lorsqu'il est nécessaire de les faire tourner dans le même sens, une roue ou un pignon intermédiaire doit être utilisé qui renchérit le mouvemement et nécessite une place supplémentaire dans l'espace réduit du mouvement. Par exemple, la roue des minutes ne peut pas engrener directement avec la roue des heures ni avec celles des secondes, puisque les trois aiguilles correspondantes doivent tourner dans le même sens.

Un but de la présente invention est donc de proposer un mouvement de montre qui évite ces inconvénients.

Un autre but est d'utiliser de moyens alternatifs dans la chaîne cinématique d'un mouvement de montre, provoquant un effet de surprise par le choix d'une technologie inhabituelle.

Un autre but est de proposer un mouvement de montre de conception alternative et nouvelle qui autorise des constructions et de designs différents des mouvements conventionnels.

Selon l'invention, ces buts sont atteints au moyen d'un mouvement de montre qui présente les caractéristiques de la revendication 1, des modes de réalisation préférentiels étant par ailleurs indiqués dans la description

En particulier, ces buts sont atteints grâce à un mouvement horloger destiné à être intégré dans un boîte de montre-bracelet et comportant au moins une courroie pour transmettre les mouvements et/ou les couples entre au moins deux poulies (c'est-à-dire entre une poulie entraînante et au moins une poulie entraînée).

En remplaçant un ou plusieurs engrenages par un ensemble formé de deux poulies et d'une courroie, on obtient tout d'abord un effet de surprise, particulièrement si les courroies sont visibles au travers du fond de la montre ou au travers du cadran. Par ailleurs, les différentes poulies connectées par une même courroie peuvent être orientées dans des plans différents, ce qui donne une liberté supplémentaire au constructeur de mouvement lors de la conception d'un nouveau mouvement.

Les autres problèmes des engrenages évoqués plus haut sont aussi résolus.

Le terme de courroie doit être interprété de manière large dans ladite demande pour inclure des courroies lisses ou crantées, des chaînes, des bandes et des câbles de transmission entre poulies. Toutefois, dans une variante préférentielle, la courroie utilisée est une courroie au moins partiellement en matériau synthétique et munie de crans (dents).

Le document CH61963 décrit un mouvement horloger comportant une chaîne cinématique incorporant une chaîne entre deux poulies. Le mouvement décrit est destiné à une pendule et ne pourrait pas sans grandes difficultés être intégré à une montre bracelet, où il n'apporterait pas les avantages recherchés dans ce document.

Des pendules murales ou de table munies de chaînes et de courroies sont aussi décrites dans US1667685, US2494011, US4320480, US5105398, US4022015 et dans US4676662. Tous ces documents concernent cependant des horloges et pendules de grandes dimensions, dont le mouvement ne peut en aucun cas être miniaturisé pour être logé dans une montre bracelet.

FR391702 décrit une montre bracelet qui indique l'heure au moyen d'une bande perforée qui fait tout le tour du poignet en étant entraînée par deux roues. L'heure peut être lue en vérifiant la position d'un indicateur sur la bande autour du poignet. La lecture est particulièrement malcommode lorsque l'indicateur mobile se trouve sur la face latérale externe du poignet, difficile à regarder. Cette solution n'est adaptée qu'à un type de montre extrêmement particulier et qui ne satisfait certainement pas l'ensemble des besoins et des goûts des utilisateurs; le mouvement décrit ne peut absolument pas être intégré dans une boîte de montre plus conventionnelle. Par ailleurs, la bande utilisée constitue un indicateur pour remplacer les aiguilles, mais n'est pas destinée à transmettre des mouvements ni des couples dans une chaîne cinématique entre deux poulies. Les deux roues en contact avec cette bande sont en effet toutes deux entraînantes.

Le document EP0509965 divulgue un système d'entraînement d'une aiguille portée par une tige attachée à une courroie tendue entre deux poulies.

L'invention sera mieux comprise à la lecture d'un exemple annexé illustré par les figures qui montrent:
La figure 1 une vue de dessus d'une montre bracelet incluant un mouvement horloger selon l'invention.
La figure 2 une vue en perspective de trois quarts d'un mouvement horloger selon l'invention.
La figure 3 un éclaté partiel du mouvement horloger de l'invention.
La figure 4 une vue de dessus du mouvement de l'invention, vu à travers la platine.
La figure 5 un détail d'une courroie.
La figure 6 une coupe longitudinale de la masse oscillante linéaire du mouvement horloger de l'invention.
La figure 7 une coupe transversale de la masse oscillante linéaire du mouvement horloger de l'invention.

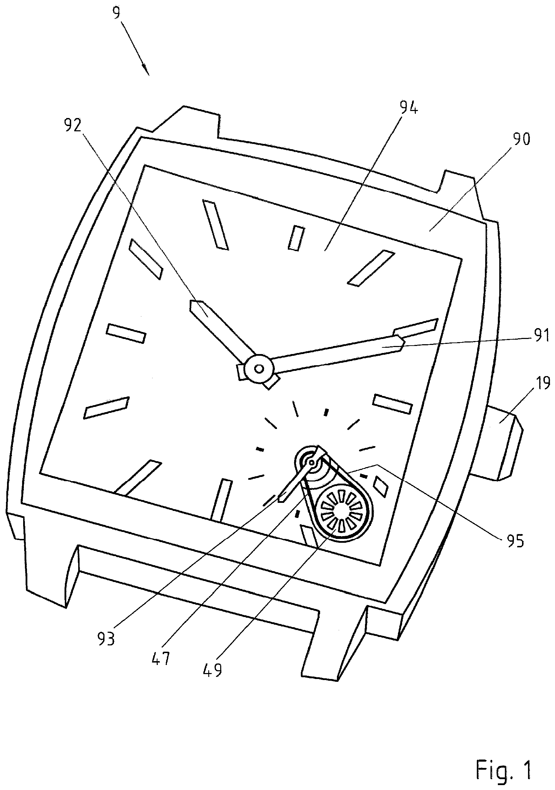

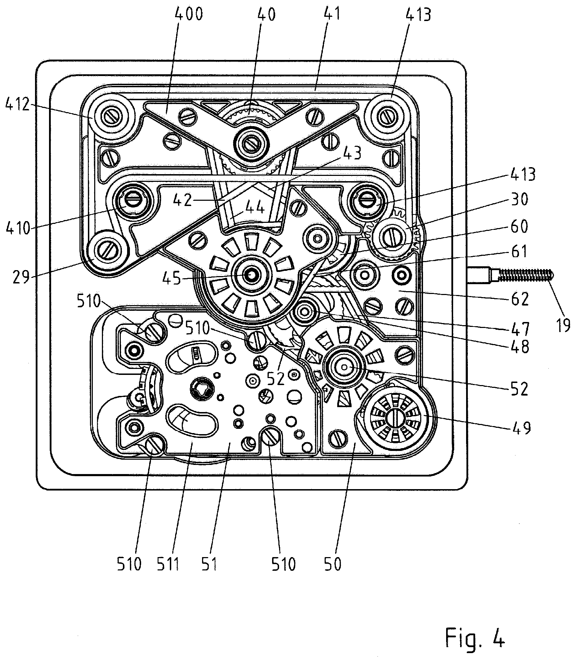

Une montre 9 équipée d'un mouvement horloger selon l'invention est illustrée à titre d'exemple sur la figure 1. La montre comporte une boîte 90 permettant d'emboîter le mouvement par le fond, comme on le verra. Une couronne de remontoir et de mise à l'heure 19, liée à un module de remontage et de mise à l'heure amovible 62 (figure 4) permet de remonter et/ou de mettre la montre à l'heure. Des aiguilles de minute 91 et d'heure 92, ainsi qu'une aiguille de petite seconde 93 à 16h30 se déplacent au-dessus d'un cadran 94 afin d'afficher l'heure. Le cadran comporte au moins une ouverture 95 permettant d'apercevoir au moins une partie du mouvement, de préférence une partie du mouvement comportant une courroie ou un tronçon significatif de courroie, comme on le verra plus loin.

Dans une autre variante non illustrée, la montre est de type squelette, c'est-à-dire dépourvue de cadran, et les aiguilles se déplacent directement au-dessus du mouvement. Dans encore une autre variante non illustrée, le cadran est constitué d'un verre ou d'un matériau synthétique opaque pour un observateur qui le regarde en face, et transparent lorsqu'on l'incline par rapport à la direction du regard. Cette variante, qui peut du reste être utilisée en combinaison avec n'importe quel mouvement de montre, permet de distinguer facilement les aiguilles au-dessus du cadran lorsque celui-ci est incliné en position de lecture, et de vérifier le fonctionnement du mouvement simplement en orientant la montre dans une direction préférentielle. Dans une autre variante, le cadran pourrait être constitué d'une cellule de cristaux liquides opaque au repos et transparents lorsqu'une tension entre les deux faces oriente les cristaux différemment.

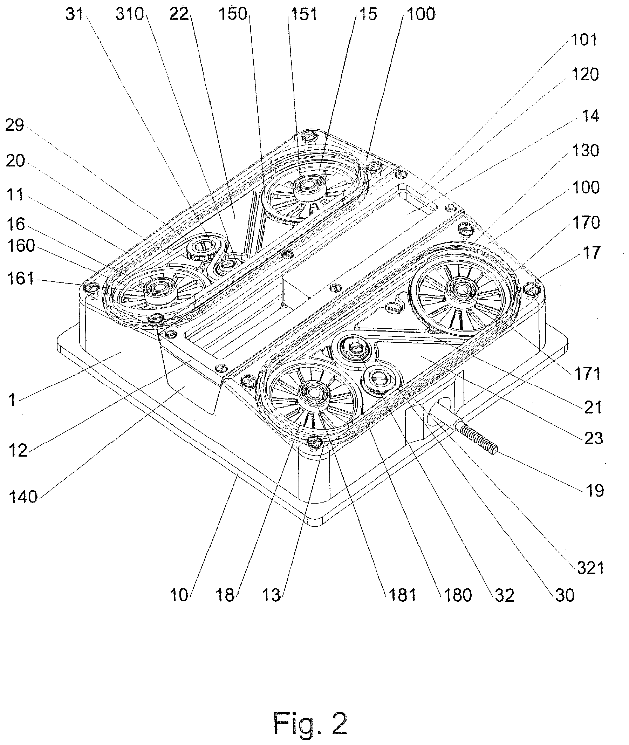

Un exemple de mouvement selon l'invention est illustré sur les figures 2 à 4. Le mouvement est construit autour d'un châssis 1 muni d'une platine 10 et d'un fond 11, 12, 13 comportant deux faces obliques 100, inclinées, dans cet exemple d'environ 13° par rapport à la platine. La portion centrale 12 entre les deux faces inclinées 11 et 13 est parallèle à la platine 100 et au cadran 94. Cette forme convexe du fond permet de réduire la surface d'appui entre le fond de la montre et le poignet, et de réduire les problèmes de transpiration.

Selon une caractéristique indépendante de l'invention, le fond du mouvement constitue directement le fond de la montre; la portion centrale plane 12 du fond du mouvement est donc directement en contact avec le poignet du porteur. Le fond 11, 12, 13 du mouvement est de préférence étanchéifié à l'aide de joints non référencés afin d'empêcher les infiltrations d'humidité dans le mouvement.

Afin de contrôler le fonctionnement du mouvement, les faces 11, 12, 13 sont fermées par des glaces 110, 120, 130 respectivement. Dans l'exemple, chaque glace est tenue par un cadre (non référencé) vissé individuellement sur le châssis 1.

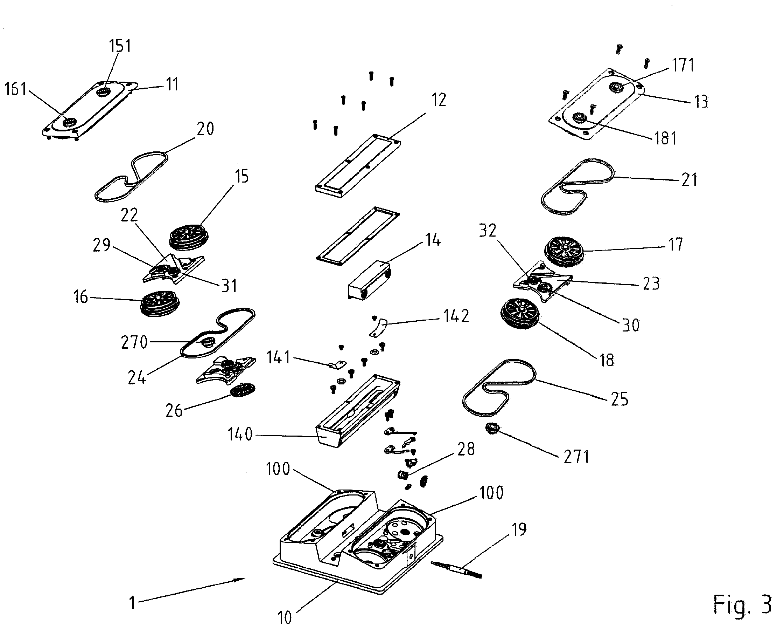

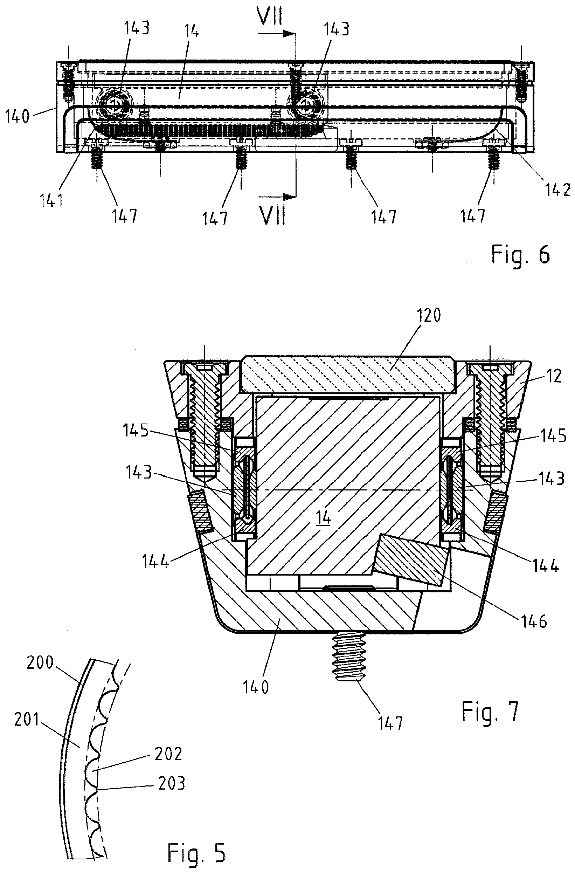

Le mouvement comporte quatre barillets 15, 16, 17 et 18 parallèles aux deux faces inclinées 100 et munis de ressorts pour emmagasiner l'énergie nécessaire à actionner le mouvement. Les axes des barillets ne sont donc pas perpendiculaires à la platine. Les deux extrémités de chaque axe sont tenues par des roulements à bille, les roulements supérieurs 151, 161, 171 et 181 étant visibles sur les figures 2 et 3. Les ressorts de barillets sont rechargés par le déplacement d'une masse oscillante, dans cet exemple une masse oscillante linéaire 14 se déplaçant sous l'effet des mouvements du porteur dans une coulisse 140 sous la glace centrale 120. La face inférieure de la masse oscillante 14 est munie d'une crémaillère 146 (figures 6 et 7) actionnant un pignon 28 à axe horizontal entraînant la poulie de renvoi gauche 29 au travers de l'engrenage 26 ou d'un train d'engrenage.

Les quatre barillets sont munis chacun de deux poulies crantées, seules les poulies 150, 160, 170 et 180 proches du fond étant visibles sur la figure 2. Les deux barillets 15 et 16 sont reliés en série au moyen d'une courroie de remontage gauche 20 engrenant avec les premières poulies 150, 160 et d'une courroie de décharge gauche 24 (figure 3) engrenant avec les deuxièmes poulies non référencées. Un pont supérieur gauche 22 sépare les deux courroies 20 et 24 dans le chemin entre les deux barillets 15, 16. Les courroies 20 et 24 sont tendues au moyen d'un tendeur 31 muni d'une portion excentrique 310 et agissant sur la face dorsale des courroies; en réglant la position angulaire de la portion excentrique 310 au moyen de la vis non référencée, on modifie la longueur du chemin de courroie afin de régler sa tension. La courroie 20 engrène en outre avec la poulie de charge des barillets gauches 29. Les déplacements de la masse oscillante 14 sont donc transmis à la courroie 20 par l'intermédiaire des engrenages 28 et 26 et de la poulie de charge 29 pour recharger les deux barillets 15 et 16.

De la même façon, les deux barillets 17 et 18 sont reliés en série au moyen d'une courroie de remontage droite 21 engrenant avec les premières poulies 170, 180 et d'une courroie de décharge droite 25 engrenant avec les deuxièmes poulies non référencées, un pont supérieur droit 23 séparant les deux courroies. La tension des courroies 21, 25 peut être réglée par le fond en agissant sur la portion excentrique 320 du tendeur 32. Une poulie de charge des barillets droits 30 est entraînée par la courroie 21.

La poulie 29 sur le chemin de la courroie 20 entraîne la poulie 30 sur le chemin de la courroie 21 au moyen de la courroie crantée 41, visible sur la figure 4 illustrant une vue de dessus, au travers de la platine 10 du mouvement. La poulie 41 est tendue par les deux tendeurs 410 et 411 munis de portions excentriques. Les oscillations de la masse 14 sont ainsi également transmises à la deuxième paire de barillets 17, 18.

La courroie 24 reliant les deuxièmes poulies de la première paire de barillets 15, 16 entraîne une poulie de décharge 270 actionnant une courroie de répartiteur gauche 42 dont seule une portion est visible sur la figure 4. La courroie 42 entraîne le plateau supérieur du répartiteur de couple 40 dont le rôle sera décrit plus bas.

De la même façon, la courroie 25 reliant les deuxièmes poulies de la deuxième paire de barillets 17, 18 entraîne une deuxième poulie de décharge 271 actionnant une courroie de répartiteur droite 43, qui entraîne le plateau inférieur du répartiteur de couple 40.

Le répartiteur de couple 40 comporte deux plateaux appuyés l'un contre l'autre par un ressort de maintien des plateaux, non représenté. Un plateau est entraîné par la courroie gauche 42 tandis que l'autre plateau est entraîné par la courroie droite 43. Les deux plateaux sont munis de dentures coopérant mutuellement, en sorte que les couples transmis par les deux paires de barillets 15-16 et 17-18 s'additionnent. La denture des deux plateaux est toutefois agencée de manière à ce qu'une différence de couple entre les deux plateaux tende à les écarter à l'encontre de la force du ressort. Lorsque cette différence de couple devient importante, l'écartement entre les deux plateaux du répartiteur est telle que les deux engrenages "décrochent" et sautent un pas; la différence de couple est donc absorbée par le ressort de maintien des plateaux. Le répartiteur de couple 40 permet ainsi de garantir que les deux paires de barillets 15-16 et 17-18 fournissent un couple approximativement constant, même si les ressorts de barillets n'ont pas des caractéristiques identiques.

Une courroie 44 relie le répartiteur de couple 40 à la poulie des heures (non représentée) sur le canon des aiguilles 45 au centre du mouvement. La poulie des heures actionne directement l'aiguille des heures 92, ainsi que la poulie de minuterie 60 au travers de la courroie de minutes 61. La poulie de minuterie 60 entraîne l'aiguille des minutes 91 au travers d'un engrenage ou d'une courroie supplémentaire non représentée.

Les rotations de la poulie de minuterie 60 sont en outre transmises au travers d'un train d'engrenages et/ou de courroies non représenté à la poulie de petite seconde 48 qui entraîne une courroie de petite seconde 47 tendue par un renvoi 49 à 16h30. Une poulie supplémentaire, ou un engrenage actionné par la courroie 47, permet d'entraîner le canon de petite seconde 50 pour entraîner l'aiguille de petite seconde 93.

Un organe réglant 51 amovible monté sur un pont 511 est fixé par des vis 511 à la platine 10. L'organe réglant peut être entièrement réglé hors du mouvement puis monté après réglage, seul un réglage fin de deuxième niveau au moyen d'une seule vis de la raqueterie étant encore nécessaire pour adapter la marche de la montre à chaque mouvement. L'organe réglant comporte plusieurs éléments et se trouve sur le même plan que d'autres organes (40, par exemple) liés au châssis.

Le réglage est ainsi grandement facilité puisque l'ensemble des points de réglage est accessible aisément lorsque l'organe réglant est démonté. L'organe réglant peut être conventionnel, à carrousel, à tourbillon ou même électronique et comporte dans cet exemple un échappement 52 dont une portion est visible sur la figure 4. Il est relié par un train d'engrenages non représenté, ou par une courroie supplémentaire, à la roue de petite seconde coaxiale au canon de petite seconde 52.

Ainsi la quasi-totalité du train d'engrenage des mouvements de montre traditionnels est remplacé par des courroies et des poulies. En particulier, la chaîne cinématique entre les barillets et le canon des aiguilles est entièrement constituée de courroies. Par ailleurs, les paliers et rubis habituels sont au moins partiellement remplacés par des roulements à bille maintenant les axes de poulies. Les tolérances sur le positionnement des axes lors du montage du mouvement peuvent ainsi être relâchées, puisque les courroies peuvent absorber des erreurs de parallélisme ou d'écartement entre poulies même relativement importantes. Par ailleurs, il est possible de disposer des poulies dans des plans non parallèles entre eux, ce qui donne au constructeur de mouvement une liberté supplémentaire lors de la conception. Par exemple, des courroies peuvent aussi être utilisées pour transporter un index, une aiguille ou n'importe quel type d'indicateur sur le cadran, sur le bord latéral ou sur une surface oblique de la montre, des cornes ou du bracelet. L'utilisation de courroies, de poulies et de cardans permet en outre de faciliter grandement la conception de mouvements comportant plusieurs ponts non parallèles entre eux.

Les poulies 29 et 30 sont parallèles aux barillets et aux faces inclinées 100; leurs axes comportent de préférence un cardan, ou un double cardan non représenté, et permettant de monter des poulies ou des engrenages parallèles à la platine 10. Les axes de ces deux poulies sont donc liés à platine au travers d'un cardan.

La figure 5 illustre à titre d'exemple un tronçon de courroie 20 selon l'invention. Différentes contraintes sont posées aux courroies du mouvement:
▪ Longueurs et sections nettement inférieures à celles des courroies connues dans d'autres domaines de la technique.
▪ Fonctionnement en continu ou quasi-continu avec un minimum d'usure et d'élongation.
▪ Doit pouvoir collaborer avec des poulies et des renvois de diamètres fortement variables.
▪ Suffisamment élastiques pour pouvoir être tendues au moyen des tendeurs et, si désiré, pour pouvoir être vrillée entre deux poulies non parallèles.
▪ Suffisamment rigides pour ne pas quitter la poulie, même en cas de chocs importants.

Selon l'invention, la courroie est constituée d'un substrat métallique fin 200, qui lui donne la solidité et la rigidité transversale requises, sur lequel est surmoulée une épaisseur de caoutchouc ou de matériau synthétique plus importante et dans laquelle sont formées les dents 203. Afin de garantir un angle de contact avec les dents de la courroie acceptable quel que soit le rayon de courbure de la courroie, les interstices 202 entre deux dents 203 sont de préférence arrondis, par exemple demi-circulaires, paraboliques ou cycloïdes, tandis que les dents 202 de la courroie se résument à une arête fine entre deux interstices. Ainsi, même lorsque la courroie 20 est très refermée, l'interstice 202 entre deux dents 203 reste suffisamment large pour que les dents de la poulie puissent y être introduites. La forme et la taille des dents de différentes poulies collaborant avec une même courroie peuvent aussi être adaptées au rayon de courbure de la courroie autour de la poulie.

Des courroies lisses ou pourvues de dents de formes différentes peuvent aussi être utilisées dans le cadre de l'invention.

Les figures 6 et 7 illustrent à titre d'exemple la masse oscillante 14 utilisée dans le mouvement pour recharger les barillets au travers de la chaîne cinématique 26-28. Selon l'invention, la masse oscillante se déplace linéairement dans une coulisse 140. Des masses oscillantes pivotantes peuvent cependant aussi être utilisées avec des mouvements à poulies selon l'invention; par ailleurs, la masse oscillante décrite peut aussi être utilisée avec des mouvements plus conventionnels à engrenages. La masse oscillante 14, qui est visible par le fond du mouvement au travers de la glace 120, est munie de quatre roues 143 qui lui permettent de coulisser entre des rails inférieurs 144 et supérieurs 145 le long de la coulisse 140. La masse 14 se déplace sous l'action de la gravité et des accélérations en fonction des mouvements du poignet du porteur.

Des ressorts 141 et 142, constitués dans cet exemple par des lames métalliques flexibles recourbées, sont disposées à chaque extrémité du parcours de la masse afin d'absorber les chocs en bout de course, de réduire le bruit et de renvoyer la masse 14 en sens inverse. Des ressorts spiraux ou élastomères peuvent aussi être utilisés. Une crémaillère 146 sur la base de la masse oscillante 14 transmet les mouvements linéaires bidirectionnels de la masse 14 au pignon à axe horizontal 28, qui les convertit en mouvements circulaires transmis au travers d'une chaîne cinématique pour recharger les quatre barillets 15, 16, 17, 18. La coulisse 147 est simplement fixée au moyen de vis 147 au châssis 1.

Bien que la montre décrite comporte quatre barillets non parallèles entre eux et un répartiteur de couple entre ces barillets, l'homme du métier comprendra que des poulies et des courroies peuvent aussi être utilisées avec des montres comportant un seul barillet, ou n'importe quel nombre de barillets.

L'utilisation de courroies dans un mouvement de montre est aussi appropriée lorsqu'un mobile ou un indicateur doit parcourir une trajectoire très longue ou de forme particulière. Dans ce cas, le mobile ou l'indicateur peut être porté directement par la courroie. Par exemple, il serait possible dans le cadre de l'invention d'utiliser une courroie portant des quantièmes pour un afficheur de grande date, ou pour afficher des phases de lune, des déplacements de planètes ou des cycles de marées le long d'une trajectoire bidimensionnelle ou même tridimensionnelle.

## Revendications

1. Mouvement horloger destiné à être intégré dans une boîte de montre-bracelet (9) et comprenant une chaine cinématique pour modifier la position angulaire d'au moins une aiguille (91, 92, 93), ladite aiguille étant une aiguille des minutes (91), des heures (92), ou des petites secondes (93), ladite chaîne cinématique comprenant au moins une courroie (20, 21, 24, 25, 42, 43, 44, 45, 47) pour transmettre les mouvements et/ou les couples entre au moins deux poulies (150, 160, 170, 180, 29, 30, 270, 271), **caractérisé en ce que** l'au moins une dite courroie (20, 21) est au moins partiellement visible sur la face inférieure du mouvement, du côté d'un affichage desdites minutes, desdites heures, ou desdites petites secondes.

2. Mouvement horloger selon la revendication 1, **caractérisé en ce qu'**il est de type mécanique et comporte au moins un barillet (15, 16, 17, 18), au moins une courroie étant prévue dans la chaîne cinématique entre lesdits barillets et lesdites aiguilles.

3. Mouvement horloger selon l'une des revendications 1 à 2, comprenant au moins une poulie (29, 30) non parallèle à la platine (10) du mouvement,

4. Mouvement horloger selon l'une des revendications 1 à 3, au moins une desdites courroies (20, 21) étant crantée.

5. Mouvement horloger selon l'une des revendications 1 à 4, au moins une des dites courroies (20) comportant un matériau synthétique (201) surmoulé sur un substrat métallique (200).

6. Mouvement horloger selon l'une des revendications 2 à 5, lesdits barillets (15, 16, 17, 18) étant tendus par les déplacements d'une masse oscillante linéaire (14) visible au travers du fond du mouvement.

7. Montre bracelet (9) comprenant un mouvement selon l'une des revendications 1 à 6.

## Patentansprüche

1. Uhrwerk, das dazu vorgesehen ist, in ein Gehäuse einer Armbanduhr (9) integriert zu werden, und eine kinematische Kette zum Modifizieren der Winkelposition mindestens eines Zeigers (91, 92, 93) umfasst, wobei der Zeiger ein Minutenzeiger (91), ein Stundenzeiger (92) oder ein Sekundenzeiger (93) ist, wobei die kinematische Kette mindestens einen Riemen (20, 21, 24, 25, 42, 43, 44, 45, 47) zur Übertragung der Bewegungen und/oder der Kopplung zwischen mindestens zwei Riemenscheiben (150, 160, 170, 180, 29, 30, 270, 271) umfasst, **dadurch gekennzeichnet, dass** der mindestens eine Riemen (20, 21) auf der Innenseite des Uhrwerks, auf der Seite einer Anzeige der Minuten, der Stunden oder der Sekunden mindestens zum Teil sichtbar ist.

2. Uhrwerk nach Anspruch 1, **dadurch gekennzeichnet, dass** es mechanisch ist und mindestens ein Federhaus (15, 16, 17, 18) umfasst, wobei mindestens ein Riemen in der kinematischen Kette zwischen den Federhäusern und den Zeigern vorgesehen ist.

3. Uhrwerk nach einem der Ansprüche 1-2, das mindestens eine Riemenscheibe (29, 30) umfasst, die zur Platine (10) des Uhrwerks nicht parallel ist.

4. Uhrwerk nach einem der Ansprüche 1-3, wobei mindestens einer der Riemen (20, 21) gezahnt ist.

5. Uhrwerk nach mindestens einem der Ansprüche 1-4, wobei mindestens einer der Riemen (20) ein Synthetikmaterial (201) umfasst, das auf ein Metallsubstrat (200) aufgegossen ist.

6. Uhrwerk nach einem der Ansprüche 2-5, wobei die Federhäuser (15, 16, 17, 18) durch Verschiebungen einer Linearschwingmasse (14), die durch den Boden des Uhrwerks hindurch sichtbar ist, gespannt werden.

7. Armbanduhr (9), die ein Uhrwerk nach einem der Ansprüche 1-6 umfasst.

## Claims

1. Clockwork movement designed to be integrated in the case of a wristwatch (9) and comprising a kinematic chain for modifying the angular position of at least one hand (91, 92, 93), said hand being a minutes hand (91), a hours hand (92) or a seconds hand (93),
said kinematic chain comprising at least one belt (20, 21, 24, 25, 42, 43, 44, 45, 47) for transmitting the movements and/or the couples between at least two pulleys (150, 160, 170, 180, 29, 30, 270, 271), **characterized in that** said at least one belt (20, 21) is at least partially visible on the lower face of the movement, on the side of a display of said minutes, hours or seconds.

2. Clockwork movement according to claim 1, **characterized in that** it is of the mechanical type and comprises at least one barrel (15, 16, 17, 18), at least one belt being provided in the kinematic chain between said barrels and said hands.

3. Clockwork movement according to one of claims 1 to 2, comprising at least one pulley (29, 30) not parallel to the plate (10) of the movement.

4. Clockwork movement according to one of claims 1 to 3, at least one of said belts (20, 21) being notched.

5. Clockwork movement according to one of claims 1 to 4, at least one of said belts (20) comprising a synthetic material (201) over-molded on a metal substrate (200).

6. Clockwork movement according to one of claims 2 to 5, said barrels (15, 16, 17, 18) being tensioned by the movements of a linear oscillating mass (14) visible through the bottom of the movement.

7. Wristwatch (9) comprising a movement according to one of claims 1 to 6.
